# EUROPEAN PATENT APPLICATION

(11) **EP 3 825 109 A1**
(43) Date of publication of application: **26.05.2021**
(21) Application number: 19210816.5
(22) Date of filing: 22.11.2019
(51) Int. Cl.: B29D 30/24, B29D 30/26

(54) **FORMING GROUP WITH CONTINUOUS RADIAL AND AXIAL ADJUSTMENT, FOR FORMING TYRES**

(71) Applicant: Marangoni Meccanica S.P.A., 38068 Rovereto (IT)
(72) Inventor: LENTI, Massimo, 38068 ROVERETO (TN) (IT); BOSCOLO, Flavio, 38068 ROVERETO (TN) (IT); DALL'AGNOL, Alex, 38068 ROVERETO (TN) (IT)
(74) Representative: Giannini, Manuela

(57) **Abstract**

A forming group (1) with continuous radial and axial expansion, for forming tyres has a configurable forming drum (3) having a mantle (35) consisting of bent tiles (37,38,41,42,46) movable in radially opposite directions under the thrust of a plurality of rack and sprocket gear drives (83) distributed along the axis (4) of the drum (3); part of said bent tiles being movable in opposite directions parallel to the axis (4) of the same drum (3) under the thrust of a nut-screw drive (100); the rack and sprocket gear drives (83) and the nut-screw drive (100) being driven by respective motors (M2)(M3) arranged outside the drum (3) and independent of each other.

## Description

### CROSS-REFERENCE TO RELATED APPLICATIONS

This patent application is related to Italian patent application No. 102018000005732 filed on May 25, 2018.

### TECHNICAL FIELD

The present invention relates to a forming group with continuous radial and axial adjustment, for forming tyres.

In particular, the present invention relates to a forming group of the type comprising a radially and axially adjustable forming drum and an actuator device suitable for rotating the forming drum and continuously varying the dimensions of the drum itself.

### BACKGROUND OF THE INVENTION

A known forming group of the type defined above is described, for example, in patent application WO 2016/178180 in the name of the same applicant.
In this forming group, the drum comprises a forming mantle consisting of crowns with axial bent tiles, said crowns being arranged side by side along the axis of the drum itself.

The outer diameter of the forming drum is varied by continuously moving the bent tiles in the radial direction between two extreme stop positions, one of which is retracted or collapsed and the other is extracted or expanded. The radial movement of the bent tiles is carried out by using a plurality of lever mechanisms.

The lever mechanisms are arranged in a crown shape inside the respective crowns of bent tiles, coupled to respective support tubes, and driven by a plurality of nut-screw assemblies, in turn arranged inside the crowns of the lever mechanisms and driven by one or more drive shafts.

The length of the forming drum, on the other hand, is varied by moving the crowns of bent tiles axially with respect to one another, and in particular, by axially translating the aforementioned tubes carrying the respective lever mechanisms along splined shafts by means of further nut-screw assemblies and respective drive motor shafts.

Although used, the known configurable forming drums are not completely satisfactory, above all due to the fact that they are constructively very complex, expensive to manufacture and have a relatively high weight, despite the fact that several components in relative motion with one another have been made with special, high strength and low weight materials.

In addition to this, the constructive features of the known forming drums pose a strong obstacle to the increase in the number of different tyres that can be made on the same forming drum, consequently obliging the final user to store a set of forming drums to be able to make a wide range of tyres with different geometries and dimensions, or to introduce additional elements to be able to adjust the required dimensions. In addition to this, the mechanisms used have a physical limit to the increase in amplitude, especially in the radial direction, and an unsatisfactory stability during the adjustment movement.

### SUMMARY OF THE INVENTION

The object of the present invention is to provide a forming group with continuous radial and axial adjustment, which allows the above-mentioned drawbacks to be overcome, and in particular is simple and inexpensive to manufacture, low weight, highly stable under load, and able to allow, by itself, the formation of multiple tyres with different radial and/or axial dimensions.

According to the present invention, a forming group with continuous radial and axial adjustment, for forming tyres, is provided as claimed in claim 1.

### BRIEF DESCRIPTION OF THE DRAWINGS

The invention will now be described with reference to the accompanying drawings, which illustrate a non-limiting embodiment thereof, in which:
- Figures 1 and 2 are perspective views, with parts removed for clarity, of a preferred embodiment of the forming group according to the present invention, arranged in a radially expanded configuration and a radially contracted condition, respectively, in both figures in a condition of minimum axial length;
- Figures 3 and 4 are perspective views, with parts removed for clarity, of the drum in Figure 1 arranged in a radially expanded configuration and a radially contracted condition, respectively, in both figures in a condition of maximum axial length;
- Figure 5 is a perspective view of a detail of Figures 1 to 4;
- Figure 6 is a partially exploded view of the drum in Figure 3;
- Figure 7 is a figure similar to Figure 2, with parts removed for clarity;
- Figure 8 is a perspective view, on an enlarged scale, of a central portion of the drum of Figures 1 to 4;
- Figure 9 is a partially sectional, perspective view of a further detail of Figures 1 to 4;
- Figure 10 is a perspective view, on an enlarged scale, of an assembly of Figures 1 to 4;
- Figures 11 and 12 are two front views of two different details of Figure 10;
- Figure 13 is a strongly enlarged perspective view, partially in section, of two different details of the assembly of Figures 1 to 4 uncoupled from one another;
- Figure 14 shows, in section and on an enlarged scale, a detail of Figure 13; and
- Figure 15 shows, in section and on an enlarged scale, a detail of Figure 14.

### DETAILED DESCRIPTION OF THE INVENTION

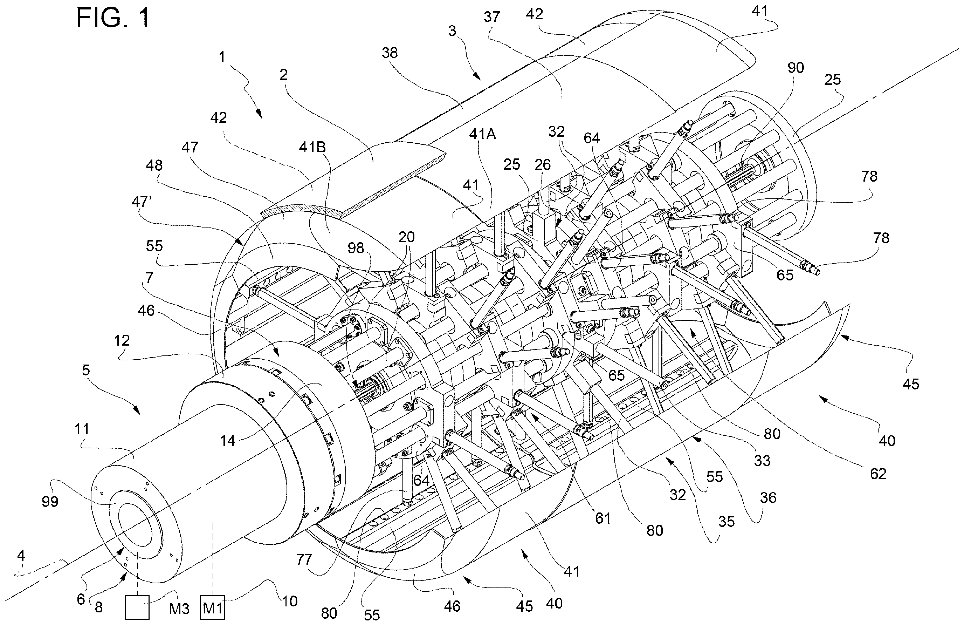

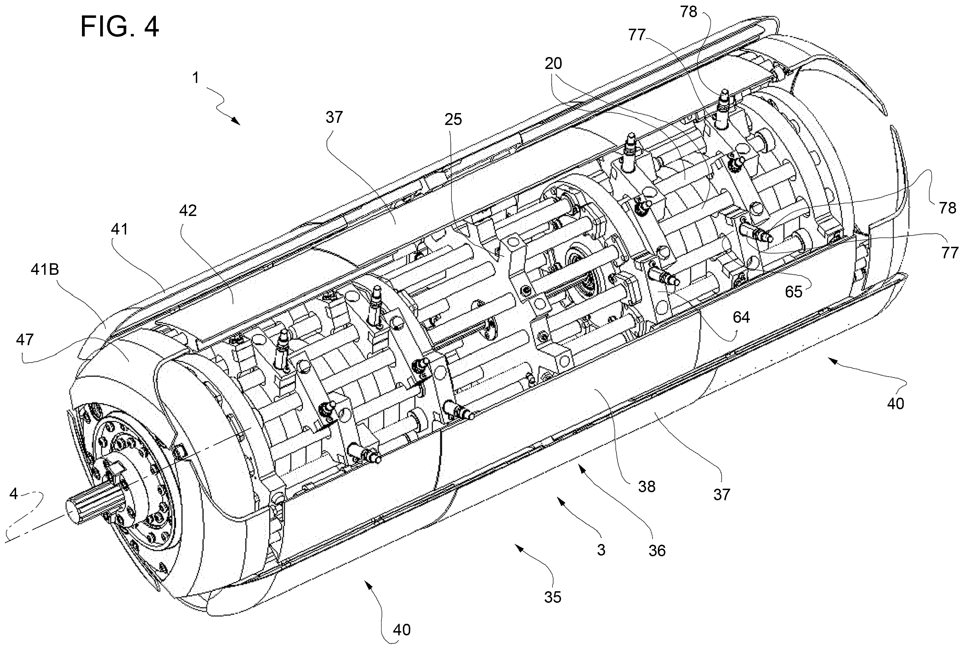

In Figures 1 to 4, number 1 indicates, as a whole, a variable geometry forming group for manufacturing a body 2 (Figure 1) of a tyre, not shown.

The group 1 comprises a forming drum 3, which is continuously adjustable both in the radial and the axial directions and has its own axis 4. The group 1 further comprises an attachment and driving device 5 for rotating the drum 3 about its axis 4, and a configuration device 6 for varying the dimensions of the drum 3 according to the dimensions of the body 2 to be manufactured.

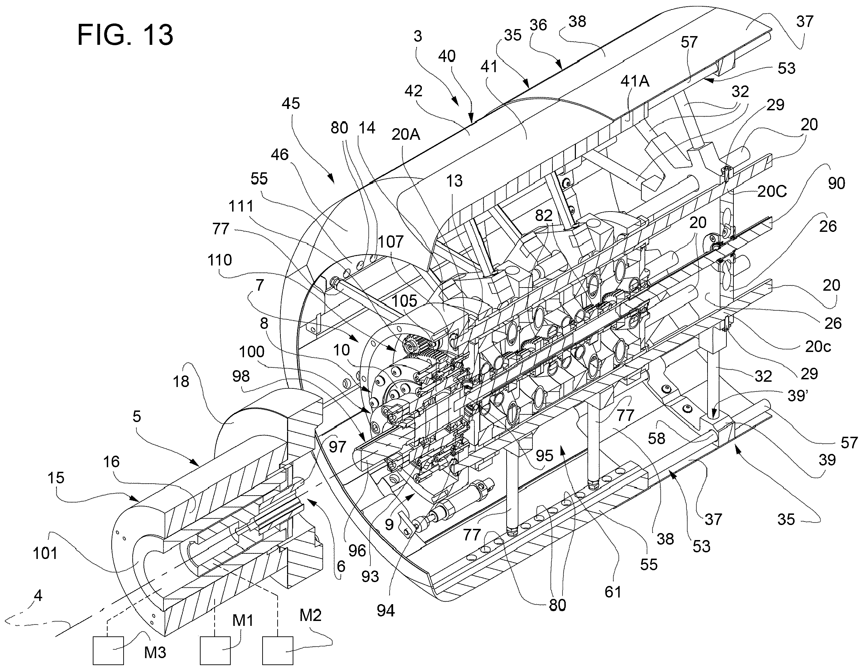

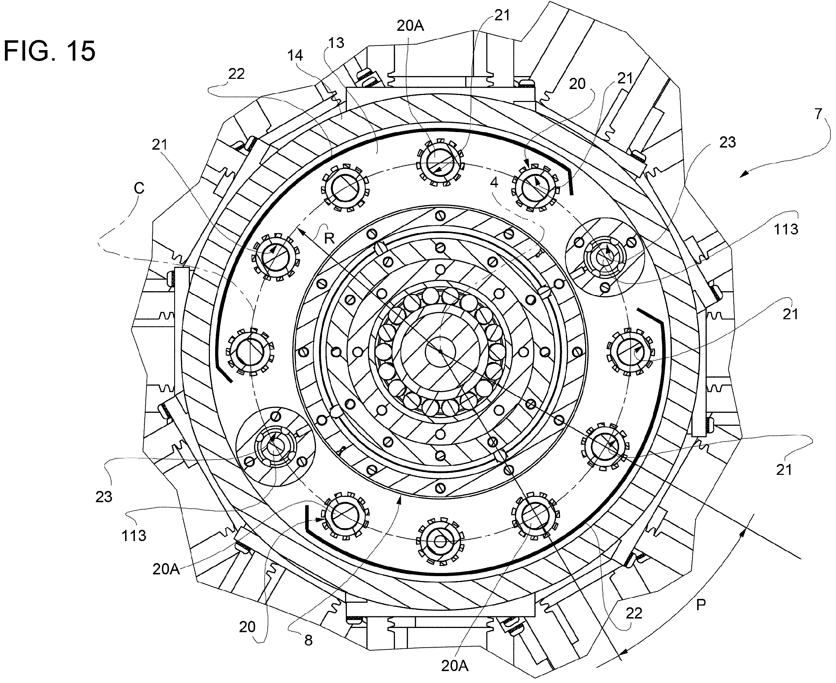

With reference to Figures 1 to 4, and in particular to Figures 13 and 15, the drum 3 comprises an attachment head 7 coaxial with the axis 4, which, in turn, comprises a hollow hub 8 and a hollow annular ring 9 surrounding the hub 8 and rotatably coupled to the hub 8 in an axially fixed position by means of a pair of rolling bearings 10.

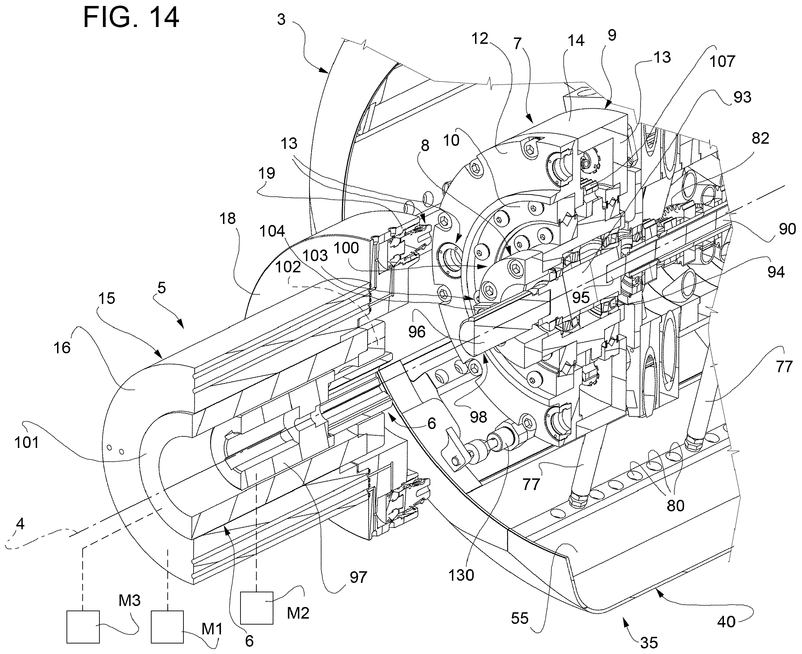

As shown in Figure 14, the annular crown 9 is bounded by two axial walls 12 and 13 facing each other and axially spaced from each other and connected to one another by a circumferential wall 14.

The head 7 is supported and rotated about the axis 4 by the device 5, which comprises an attachment mandrel 15 extending coaxially with the axis 4, which, in turn, comprises a hollow attachment shank 16 and a radial flange 18. The shank 16 is rotatable about the axis 4 under the thrust of a known motor M1 schematically illustrated in Figures 13 and 14, whereas the flange 18 abuts against the wall 12 and is releasably connected to the wall 12 via a conveniently pneumatic, quick-fit coupling 19 (Figure 14), known per se and not described in detail.

According to a variant, not shown, the hollow peripheral portion 9 of the attachment head 7 is connected to the mandrel 15 via screws or other equivalent connection devices designed to allow the detachment of the head 7 and the replacement of the drum 3, if necessary.

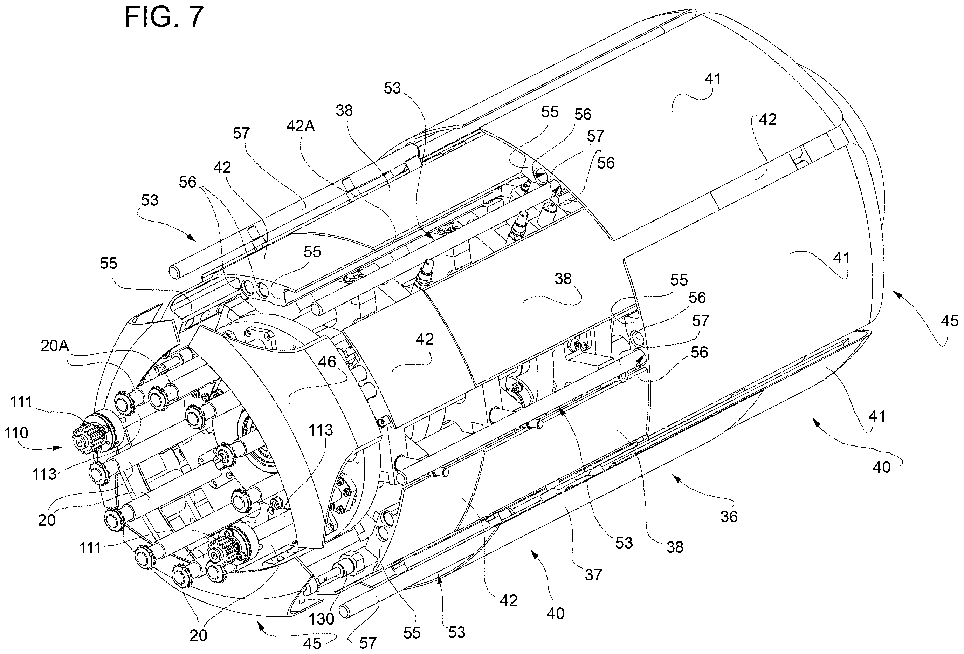

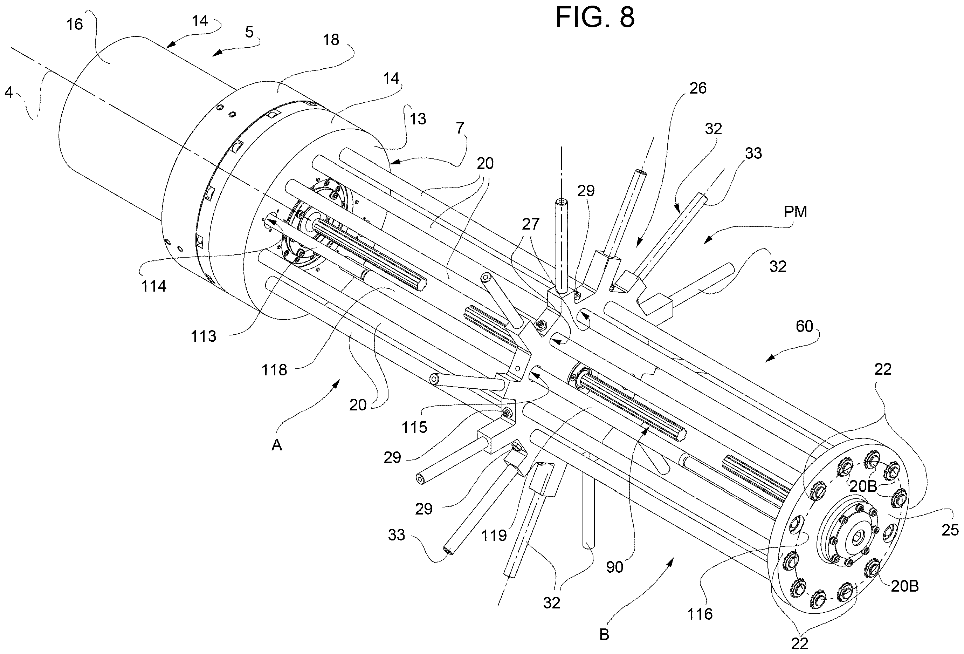

With reference to Figure 1, and in particular to Figure 8, a plurality of straight cylindrical bars 20 protrude in a cantilever fashion from the head 7, parallel to the axis 4 and on opposite sides of the mandrel 15, in this specific case there are ten bars 20. The bars 20 have end sections 20A (Figures 7 and 13) facing the attachment head 7 and firmly connected to the wall 13. For this purpose, with reference to Figure 15, the wall 13 comprises a crown of through holes 21 with centres spaced at a pitch P along a circumference C of radius R. The portions 20A are distributed and locked within two half-crowns 22 of five holes 21 each and separated from each other by two additional diametrically opposite through holes, designated as 23. The opposite ends 20B of the bars 20, on the other hand, are firmly connected to an annular plate 25 coaxial with the axis 4 (Figure 8).

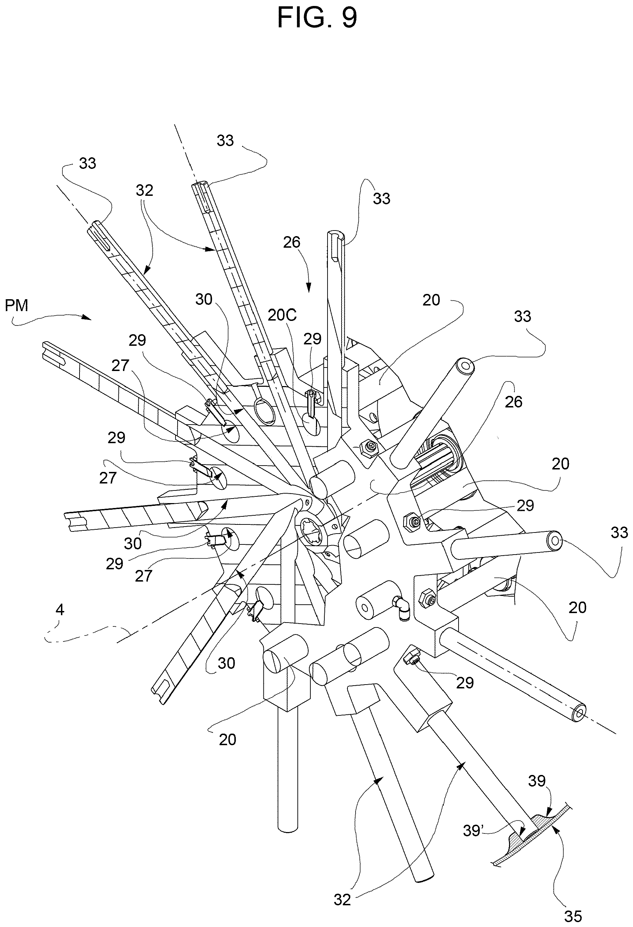

Still with reference to Figures 8 and 9, the drum 3 further comprises a fixed annular disc 26 arranged in a median position between the attachment head 7 and the annular plate 25 coaxially with the axis 4. The disc 26 has a same crown of axial holes 27 as the crown of axial holes 21 and the bars 20 comprise respective median portions 20C (Figure 13) which pass through respective holes 27 and are locked in the holes 27 by respective dowels 29 (Figures 8, 9 and 13).

With reference to Figure 9, the disc 26 has a respective blind hole 30 extending in a radial direction between two consecutive holes 27. An end section of a respective guide bar 32 protruding outside the disc 26 and having an outer end portion 33 firmly connected to a configurable mantle 35 of the drum 3 slides freely in each blind hole 30. The bars 32 have respective axes, all lying in a median plane PM of the drum 3 orthogonal to the axis 4. (Figures 8, 9).

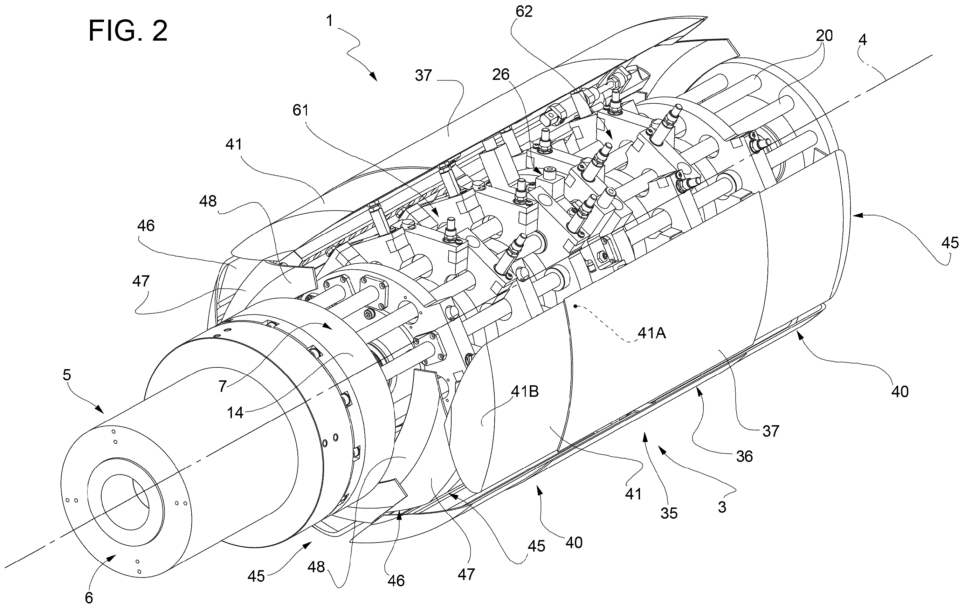

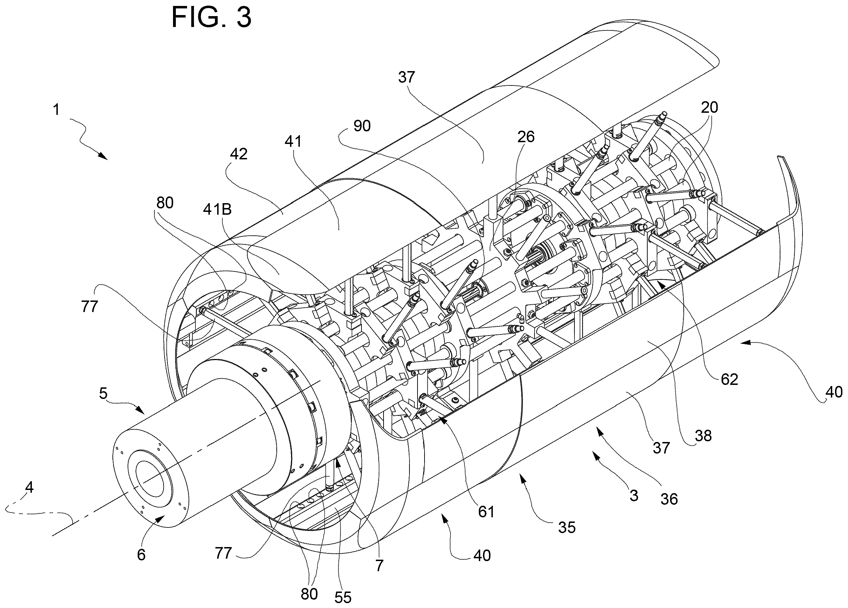

The mantle 35, which extends coaxially with the axis 4, comprises a plurality of bent tiles coupled to each other and to the device 6, as will be better described below, and is suitable to assume a plurality of forming configurations, each for forming different bodies 2, comprised between two extreme forming radial configurations, one of which a radially expanded, maximum diameter configuration shown in Figures 1, 3, 13, 14, and the other a radially collapsed, minimum diameter configuration shown in Figures 2, 4 and 7, and between two extreme axial configurations, one of which a minimum length configuration shown in Figures 1 and 2, and the other a maximum length configuration shown in Figures 3, 4 and 13.

Still with reference to Figures 1 to 4, the mantle 35 comprises a plurality of crowns of bent tiles distributed along the axis 4, and in particular a median crown 36 formed by six bent tiles 37 circumferentially alternating with six bent tiles 38. The bent tiles 37 and 38 straddle the fixed disc 26 and have rectilinear generatrices parallel to the axis 4. Each bent tile 37, 38 has a respective boss 39 (Figures 9, 13) radially protruding towards the axis 4 and provided with a radial hole 39' inside which the end section 33 of a respective bar 32 is locked, conveniently screwed (Figures 9, 13).

The mantle 35 further comprises two intermediate crowns 40 of bent tiles arranged on opposite axial sides of the median crown 35, and each comprising six bent tiles 41 and six bent tiles 42 circumferentially interspersed with the bent tiles 41 and geometrically different from the bent tiles 41. The bent tiles 42 have rectilinear generatrices parallel to the axis 4 and each comprise an end section 42A inserted below a corresponding bent tile 38, whereas each of the bent tiles 41 still has an end section 41A inserted below the corresponding bent tile 37 and a opposite end section 41B, which protrudes beyond the free end of an adjacent bent tile 42 and is curved towards the axis 4.

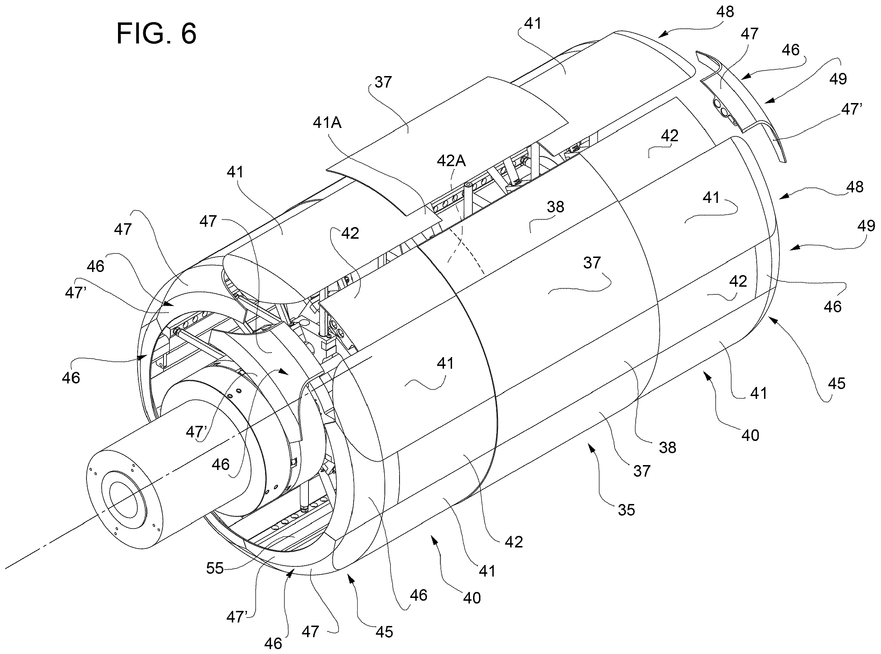

Finally, the mantle 35 comprises two head crowns 45, each having six identical curved bent tiles 46 radially interspersed with the sections 41B. Each bent tile 46 comprises, starting from a respective bent tile 42, a curved portion 47 with a concavity facing the axis 4 and axially tapered towards the respective bent tile 42, and an end radial portion 47' extending from the portion 47 towards the axis 4 (Figures 1, 6).

The bent tiles 37 and 41 and the bent tiles 38, 42 and 46 are axially aligned with each other to form six rows 48 and six rows 49 of bent tiles radially interspersed with the rows 48 (Figure 6).

The rows 49 are arranged next to the rows 48 when the drum 3 is in its expanded position and are arranged inside the rows 48 when the drum 3 is in its collapsed position. The bent tiles 41 of each row 48 and the bent tiles 42 and 46 of each row 49 are axially movable and spaced apart from the respective bent tiles 37, 38 when the drum 3 is in its maximum length condition, and are closer to and partially overlap the respective bent tiles 37, 38 when the drum 3 is in its minimum length condition.

For this purpose, the bent tiles of each row 48, 49 of bent tiles are coupled together by a guide and slide assembly 53 (Figures 7 and 13) comprising, for each bent tile of the row 48, 49, a respective internal axial rib 55 protruding towards the axis 4 and axially aligned with the ribs 55 of the bent tiles of the same row and each provided with a respective pair of axial through holes 56.

The holes 56 are engaged in an axially sliding manner by respective cylindrical guide bars 57 forming parts of the assembly 53. Each bar 57 has a respective intermediate portion 58 (Figure 14) locked in a through hole formed through the boss 39 of the respective intermediate partition 37, 38 (Figure 13). In this way, the bent tiles 41, 42 and 46 are able to move axially between two extreme stop positions and allow axial adjustment of the drum 3.

The rows 48 and 49 of the bent tiles, instead, are radially movable under the thrust of the configuration device 6, which comprises a support rigid frame 60 (Figure 8) rotating with the head 7 and defined by the bars 20, the wall 13, the plate 25 and the disc 26, and two bent tile handling modular units, designated as 61 and 62 (Figures 1, 2, 3, 10 and 13).

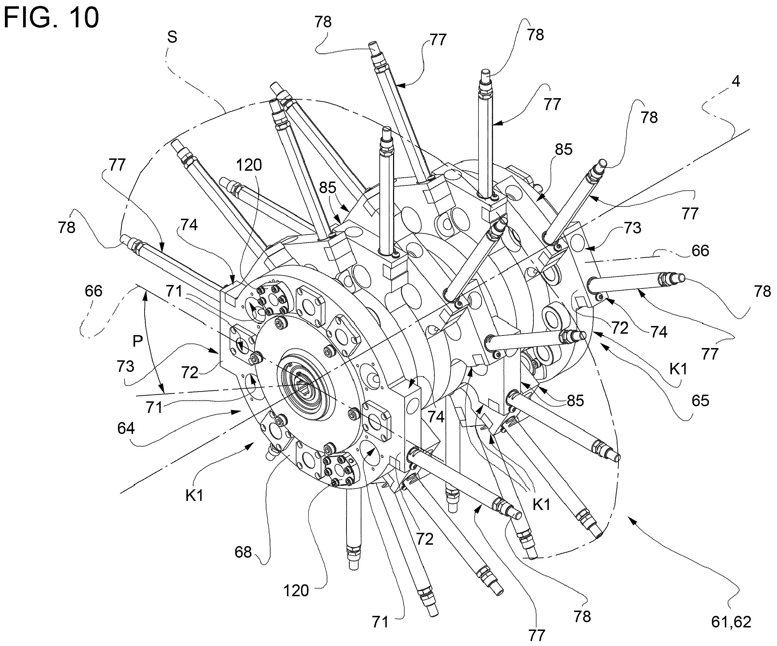

The modular units 61, 62, only one of which is shown in Figure 10, are conceptually identical to each other (Figures 1, 2, 3) and arranged in series with one another along the axis 4, one in the space A (Figure 8) comprised between the attachment head 7 and the median disc 26 and the other in the space B comprised between the disc 26 and the annular plate 25.

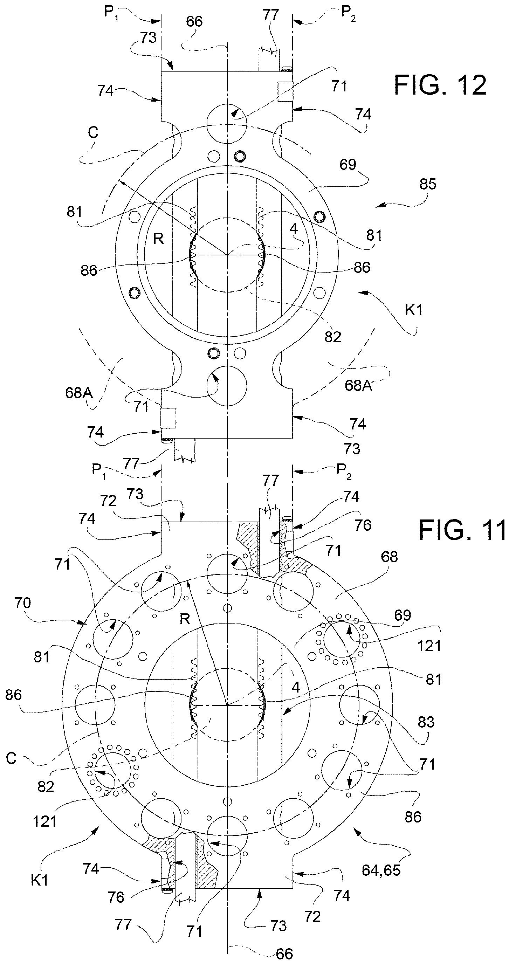

With reference to Figure 1, and in particular to Figures 10 and 11, each modular unit 61, 62 comprises two annular end discs, designated as 64 and 65, each having its own radial plane of symmetry 66 in which the axis 4 lies.

The discs 64 and 65 are constructively identical to each other, extend coaxially with the axis 4, and in the particular example described, the disc 64 is in a clockwise rotated position (Figure 10) spaced by a same pitch P as the pitch P between the holes 21 about the axis 4 relative to the disc 65.

With reference to Figure 11, each annular disc 64, 65 comprises a respective outer annular portion 68 and a respective inner annular portion 69 forming part of a body made in one piece. A crown 70 of through holes 71 distributed exactly like the holes 21 present on the wall 13 of the head 7, i.e. at a pitch P along a circumference C of radius R, is formed on the outer annular portion 68. The holes 71 are each slidably engaged by a respective bar 20.

Still with reference to Figure 10, and in particular to Figure 11, two parallelepiped portions 72 protrude in a cantilever fashion from the outer annular portion 28 in diametrically opposite directions. The annular portions 68 and 69 and the parallelepiped ones 72 form part of a body made in one piece, which is conveniently, but not necessarily, made of a metallic material.

Each parallelepiped portion 72 is symmetrical relative to the respective radial plane of symmetry 66 and is laterally bounded by one flat peripheral surface 73 orthogonal to the respective radial plane 66 and by two flat lateral surfaces 74 parallel to each other and to the respective radial plane 66.

Each disc 64, 65 has two radial through holes 76 parallel to each other, which open onto the respective surface 73 and are arranged on diametrically opposite sides of the axis 4, the respective radial plane 66 and the holes 71 through which the radial plane 66 passes.

The radial holes 76 are slidably engaged by respective stems 77, the external sections of which extend in opposite directions, each through a respective surface 73, and the end portions of which 78 (Figure 10) are inserted and locked inside one of the radial holes 80 of a respective row of radial holes formed in the ribs 55 of the bent tiles 41 and 42 (Figures 1, 14 and 15). A respective rack 81 is formed on an internal portion of each stem 77 opposite to the portion extending beyond the respective surface 73, the rack facing the rack 81 of the other bar 77 and meshing with a drive sprocket 82 coaxial with the axis 4 and rotatably coupled to the portion 69 in an axially fixed position.

The sprocket 82 and the respective racks 81 define, for each disc 64, 65, a corresponding rack and sprocket gear drive 83 suitable for radially translating the stems 77 and thus the respective bent tiles in unison and in opposite directions according to a law imposed by the gear ratio of the gear drive 83 itself.

According to a variant, not shown, each one or part of the gear drives 83 comprises a single stem 77 and a single rack 81 meshing with the respective sprocket 82. The gear drives 83 conveniently have the same gear ratio in order to move all the stems 77 with the same law of motion. Alternatively, some of the gear drives 83, for example those that move the rows 48 of bent tiles, have a different gear ratio from the other gear drives 83. In this way, a part of the bent tiles is moved radially with one law of motion and the remaining part with a different law of motion. A different law of motion in the radial direction allows a large variation in diameter to be obtained and also allows the avoidance of interference between the bent tiles or the emergence of voids between the same bent tiles, which would correspond to through openings in the mantle.

Still referring to Figures 1, 2, 3 and 10, and in particular to Figure 12, each modular unit 61, 62 also comprises a plurality of plate-shaped elements 85 arranged between the discs 64, 65 and also rotated with respect to each other and to the discs by a pitch P.

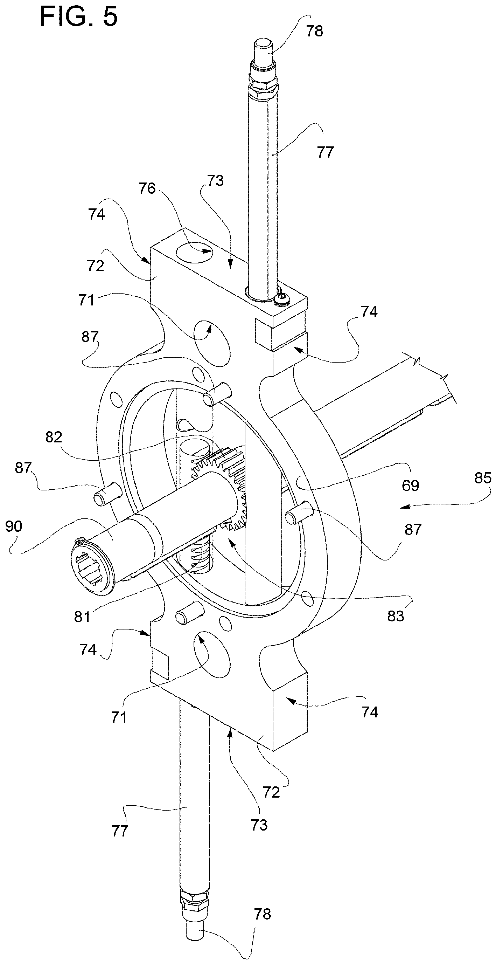

Still with reference to Figures 5, 11 and 12, the elements 85 are constructively identical to each other and differ from the discs 64, 65 solely because the portion 68 is devoid of two perforated portions or sections 68A bounded by respective planes PI, P2 parallel to the median plane 66 and in which the surfaces 74 lie. The parts of the elements 85 common to the discs 64, 65, where possible, are marked with the same reference numbers as the corresponding parts of the discs 64 and 65 themselves (Figures 5, 11 and 12) . Conveniently, the elements 85 of each modular unit 61, 62 are arranged along the axis 4 in contact with one another, and the first and last of the same elements 85 are arranged in contact with the respective disc 64, 65.

With reference to Figure 10, each element 85 is rotated about the axis 4 by the aforementioned pitch P with respect to the element 85 adjacent thereto and to the respective disc 64, 65, if arranged close to the disc 64, 65 itself, and is locked in this position by locating pins 87 (Figure 5) and screws, not shown, interposed between the elements 85 and the discs 65, 66.

As can be seen in Figures 1, 3 and 10, in this angular configuration, in addition to engaging the holes 71 of the discs 64, 65, each of the bars 20 also slidably engages the respective holes 71 of two of the elements 85, while extending outside the other elements 85.

Still in this angular configuration, the stems 77 extend along a helical path S coaxial with the axis 4, as clearly shown in Figures 1, 3 and 10. Like the portions 78 of the stems 77 of the discs 64, 65, the end portions 78 of the stems 77 of the elements 85 are also each inserted and locked inside a respective radial hole 80 of the bent tiles 41 and 42.

Each of the discs 64, 65 and each of the elements 85 together with the respective stems 77 and the respective gear drives 83 defines a respective bent tile handling unit designated as K1 in Figures 10, 11 and 12.

The sprockets 82 of the discs 64, 65 and of the elements 85 are provided with respective splined holes coaxial with the axis 4 and engaged by a single splined shaft 90 (Figures 1, 5, 8, 13 and 14) .

With specific reference to Figures 8, 13 and 14, the splined shaft 90 is common to all the sprockets 82 and both the modular units 61 and 62, and comprises opposite end sections and an intermediate section passing through the disc 26, which are rotatably coupled to the hub 8, the disc 26 and the plate 25, respectively, in an axially fixed position.

With reference to Figures 13 and 14, the hub 8 houses a cylindrical interface body 93, which is coupled to the hub 8 by means of bearings 94 and has opposite angular retention or constraint axial seats engaged, in an angularly fixed manner, one by an end section 95 of the splined shaft 90 and the other by an end section of a drive shaft 96. The shaft 96 protrudes outside the hub 8 and is, in turn, locked in a seat of a drive mandrel 97 driven by a respective motor M2, which is shown schematically.

The motor M2, the mandrel 97, the shafts 90 and 96, and the rack and sprocket gear drives 83 form part of a group 98 for the radial configuration of the drum 3.

The group 98, in turn, forms part of the device 6.

The device 6 also comprises a group 100 for the axial configuration of the drum 3.

Still with reference to Figures 13 and 14, the group 100 comprises the hub 8 and an additional tubular mandrel 101 arranged between the two mandrels 15 and 97 and rotatably coupled to the shank 16 in an axially fixed position. The mandrel 101 is rotatable about the axis 4 with respect to the mandrel 15 and the mandrel 97 under the thrust of its own motor M3 and ends on the side facing the head 7 with a pair of axial seats 102 (Figure 14). The seats 102 are part of a front angular coupling 103 between the mandrel 101 and the hub 8. The front coupling 103 comprises a pair of corresponding axial teeth 104 protruding in a cantilever fashion from a portion of the hub 8, which in turn axially protrudes in a cantilever fashion from the head 7.

Still with reference to Figure 13, a toothed wheel 107 (Figures 13 and 14), which extends inside the hollow annular crown 9 and is rotatable about the axis 4 with respect to the annular crown 9 under the thrust of the motor M3, is keyed onto an intermediate portion 105 of the hub 8 arranged inside the head 7. The wheel 107 forms part of a gear drive 110 (Figure 13), comprising, in turn, a pair of toothed pinions 111 meshing with the wheel 110 and keyed onto an end section of respective torsion bars 113 (Figure 7, 8) parallel to the bars 20. Each torsion bar 113 passes through respective holes 114 of the wall 13, 115 of the disc 26 and 117 of the plate 25, and is rotatably coupled to the plate 25 and the wall 13 in an axially fixed position by means of bearings housed in the holes 114 and 116. Each torsion bar 113 comprises two sections 118 and 119, one extending in the compartment A and the other in the compartment B, which pass through the respective groups 61, 62 and are externally threaded, one with a right-hand thread and the other with a left-hand thread. With reference to Figure 10, the sections 118 and 119 are screwed in respective nut-screws 120 locked inside the holes 121 of the plates 64, 65 (Figure 11).

The torsion bars 113 and the respective nut-screws 120 define a nut-screw assembly forming part of the group 100 and suitable to axially move the two groups 61, 62 and the respective bent tiles in opposite directions along the bars 20 and the axis 4.

Still with reference to Figures 7, 13 and 14, three of the six bent tiles 46 are axially movable with respect to an adjacent bent tile 46 to and from a respective bent tile 42 under the thrust of their own linear actuator 130, which is conveniently, but not necessarily, a pneumatic actuator, between two extreme stop positions, one of which is next to the respective bent tile 42 when the drum 3 is in the expanded configuration, and the other is spaced or advanced, when the drum is in its contracted configuration.

The operation of the forming group 1, and in particular, how to configure the drum 3 as the features of the body 2 to be made change, are immediately clear from the above.

In particular, thanks to the shafts 90, 96 and 97, the sprockets 82 can be rotated, and consequently, the bars 77 and the bent tiles connected thereto can be moved in opposite directions by keeping the motors M1 and M3 off and operating the motor M2. In this way, the position of the rows 48 and 49 of bent tiles can be varied in the radial direction continuously and with laws of motion predefined by the gear ratio of the gear drives 83, and therefore the outer diameter of the drum 3 can also be varied continuously. Experimentally, it has been possible to see how the above-described rack and sprocket kinematic mechanisms allow the attainment of a drum having a maximum diameter which is about two and a half times the minimum diameter.

If necessary, the actuators 130 are activated together with the variation of the outer diameter so as to axially move the respective bent tiles 46 in order to avoid interference between the bent tiles when the outer diameter of the drum 3 takes a value close to the minimum diameter. Interference between the bent tiles and/or the presence of radial passages in the mantle are avoided, especially when the gear drives 83 have the same gear ratio, by using loose bent tiles, i.e. of the type comprising flexible flaps or flaps having hinges or weakenings that allow a portion of the bent tile to rotate with respect to a portion for anchoring to the bars 77.

On the other hand, by keeping the motors M1 and M2 off and operating the motor M3, it is possible to rotate the threaded bars 113 and simultaneously move the groups 61, 62 relative to one another to and from the central disc 26 so as to vary the length of the drum 3. It is evident that the maximum length of the drum is exclusively dictated by the length of the bars 20.

Once the desired radial and axial configurations have been reached, the motor M1 is operated and the configured drum 3 rotated about the axis 4, while keeping both motors M2 and M3 off, so as to form the body 2.

Should it be necessary to replace the drum 3 either for maintenance or production changeover, this can be done in extremely short times and simply by deactivating the device 16 which releases the head 7 of the drum 3 from its constraint to the mandrel 16.

From the above, it is clear that the group 1, and in particular the drum 3, are extremely simpler compared to the known solutions, both from the constructive and the assembly point of views.

As regards the construction aspect, the drum 3 comprises a plurality of units K1 which are identical or different from one another solely due to the different gear ratios of the rack and sprocket gear drives 83 and all coupled to the support and sliding bars 20, which are identical to each other.

As regards the assembly, on the other hand, it is clear that this does not require particular steps, settings or the like since the elements 84 and the discs 64, 65 of each group 61, 62 are arranged in contact with each other and positioned relative to each other by the locating pins 87. Once the groups 61, 62 have been formed, the sprockets 82 are already aligned with each other and crossed by the only existing torsion shaft, whose axis coincides with the axis 4.

The number of movement elements 85 can be selected in the design phase and be easily changed thereafter by adding or removing elements 85 from each modular group 61, 62 so as to provide or form drums of different lengths without requiring adaptation or replacement of other parts of the drum.

In addition to this, the use of rack and sprocket assemblies allows most of the rotating mass to be concentrated in the neighbourhood of and in proximity to the axis of rotation of the drum, so the centrifugal forces and inertia actions are again significantly reduced compared to the known solutions.

Furthermore, the use of rack and sprocket gear drives in place of the usual mechanisms, and in particular of lever transmissions, first of all allows the positioning of the bent tiles in the radial direction to be controlled precisely and this same precision to be maintained over time, since no significant play is generated even after prolonged use of the drum, which instead inevitably occurs in all lever or similar transmissions, where tolerance control is reflected on a greater plurality of components.

Grouping the rack and sprocket gear drives into two blocks and simultaneously moving the two blocks in opposite directions by means of a screw drive also allows a more precise axial adjustment, thus maintaining the centre of the drum, i.e. the median axial plane of the drum 3, always in a fixed position. The drum 3 has a fixed central crown of bent tiles along the axis 4 and a pair of lateral crowns of bent tiles axially movable with respect to the fixed central crown.

Finally, the use of rack and sprocket gear drives, because of their precision, does not require the presence of locating or end-of-travel sensors arranged inside the drum, thus significantly reducing machine downtime compared to the known solutions in case of failure of the same sensors. In the group described herein, the configuration of the drum 3 is immediately detectable by means of a simple encoder arranged on the axis of the motors M2 and M3, and therefore also outside the drum 3.

The particular described method of supporting the bent tiles further allows the number of bent tiles to be varied according to the diameter ranges (expanded / collapsed) so as to achieve the best geometric transition with respect to the theoretical cylindrical surface.

In addition to this, the particular way of supporting the bent tiles allows groups of bent tiles to be selected and manufactured independently of the internal kinematic mechanism of the drum; in fact, the use of support stems, each driven by a respective rack and sprocket gear drive, makes it possible to separate what can be defined as the "drive motor" from the mantle formed by the plurality of bent tiles. The advantage is the possibility of using the same kinematic mechanism for a plurality of geometrical configurations of bent tiles according to the construction of the tyres to be manufactured.

Furthermore, the control of the radial position of the bent tiles is intrinsically and irreversibly determined by the kinematic mechanism of the drum, therefore the motors M do not have a critical function in achieving the requirement of precision and stability of the movement.

## Claims

1. A forming group with continuous radial and axial adjustment for forming tyres, the group comprising:
- a forming drum, which has an axis and comprises an attachment head and an outer forming mantle having a plurality of bent tiles;
- a continuous radial adjustment device driven by a first motor for varying an outer diameter of the drum and moving the bent tiles with respect to the axis in a radial direction; and
- a continuous axial adjustment device driven by a second motor for varying the length of the drum and moving the bent tiles in directions parallel to said axis;
the group being **characterised in that** said continuous radial adjustment device comprises a plurality of rack and sprocket gear drives distributed along said axis and housed within said mantle, and a plurality of sliding stems each having an end portion coupled to a respective said bent tile; each rack and sprocket gear drive comprising at least one mobile rack coupled to a respective said stem for translating the respective stem in a sliding direction orthogonal to said axis; each said stem being arranged along a helical path coaxial with said axis; and **in that** said continuous axial adjustment device comprises actuator means driven by said second motor for moving said rack and sprocket gear drives and the said respective stems in opposite directions parallel to said axis.

2. The group according to claim 1, **characterised in that** said rack and sprocket gear drives have either the same or different gear ratios for moving said stems with the same or different laws of motion, respectively.

3. The group according to claim 1 or 2, **characterised in that** each said rack and said respective stem are aligned with one another in said sliding direction and firmly connected to one another.

4. The group according to one of the claims 1 to 3, **characterised in that** each of said rack and sprocket gear drives comprises a respective pinion coaxial with said axis and meshing with said rack; said pinions being rotated by a single shaft coaxial with said axis and driven by said first motor.

5. The group according to claim 3 or 4, **characterised in that** each of said rack and sprocket gear drives comprises a pair of racks arranged on diametrically opposite sides of said respective pinion and each firmly connected to a respective stem; the stems of each said drive being connected to respective said bent tiles and translating along said respective sliding direction in opposite directions between two extreme stop positions corresponding to a contracted position of minimum diameter of the drum and an expanded condition of maximum diameter of the drum, respectively.

6. The group according to claim 5, **characterised in that** said pair of racks and the respective stems are arranged angularly rotated about said axis with respect to the stems of an adjacent rack and sprocket gear drive by a predefined pitch and in one and the same direction; the stems having said respective end portions of attachment to the bent tiles arranged along said helical path coaxial with said axis.

7. The group according to any one of the preceding claims, **characterised in that** said rack and sprocket gear drives are grouped into two drive groups separate and different from one another and axially spaced; said continuous axial adjustment device comprising a straight guide parallel to said axis and actuator means driven by said second motor for simultaneously translating said two groups along said straight guide in axially opposite directions between two extreme axial stop positions corresponding to a condition of minimum length of said drum and a condition of maximum length of the same drum.

8. The group according to claim 7, **characterised in that** said straight guide protrudes in a cantilever fashion from said attachment head and comprises a crown with first straight guide bars parallel to one another and to said axis; said first guide bars protruding in a cantilevered fashion from said attachment head and being integrally connected to the attachment head.

9. The group according to claim 7 or 8, **characterised in that** said bent tiles are aligned with one another to form axial rows of bent tiles; the bent tiles of each said axial row of bent tiles being coupled to a further straight sliding guide for translating in opposite directions along said further guide; said further straight guide extending outwards and in a radially spaced position from said straight guide.

10. The group according to claim 9, **characterised in that** each said bent tile comprises an attachment portion protruding towards said axis and provided with at least one axial hole, and **in that** said further guide comprises at least one guide bar parallel to said axis and engaging said holes in a sliding manner.

11. The group according to any one of the claims 7 to 10, **characterised in that** said actuator means driven by said second motor comprise a nut-screw drive housed within said mantle and driven by said second motor.

12. The group according to claim 11, **characterised in that** said nut-screw drive comprises a pair of threaded bars parallel to said axis and driven by said second motor; each threaded bar comprises two threaded lengths, one with right-hand threads and the other with left-hand threads; one of said threaded lengths being screwed in a nut-screw integral with one of said rack and sprocket gear drives, and the other threaded length being screwed in a nut-screw integral with the other of said rack and sprocket gear drives.

13. The group according to claim 11 or 12, **characterised in that** the actuator means driven by said second motor further comprise a toothed wheel drive interposed between said second motor and said nut-screw drive and arranged outside of said mantle.

14. The group according to claim 13, **characterised in that** said toothed wheel drive is housed in said attachment head and comprises a toothed wheel coaxial with the axis, and for each said threaded bar a respective sprocket is keyed onto one end of the respective threaded bar and meshes with said toothed wheel.

15. The group according to any one of the claims 12 to 14, **characterised in that** said threaded bars extend on opposite sides of said axis, each between two respective said first guide bars.

16. The group according to any one of the claims 8 to 15, **characterised in that** it comprises a reference disc fixed with respect to said first straight guide and lying in a median plane of said forming drum; said first straight guide passing through said reference disc and being firmly connected to said reference disc; said two groups of rack and sprocket gear drives being arranged on axially opposite sides of said reference disc.

17. The group according to claim 16, **characterised in that** said reference disc supports a plurality of radial guide assemblies and **in that** said mantle comprises a median crown with axially fixed median bent tiles; said median bent tiles being firmly connected to said radial guide assemblies.

18. The group according to claim 17, **characterised in that** each said radial guide assembly comprises a hole drilled in said disc orthogonally to the axis, and an attachment stem sliding in said hole and having an end portion firmly connected to said median bent tile.

19. The group according to any one of the preceding claims, **characterised in that** it further comprises a hollow mandrel for supporting and rotating said forming drum about said axis and driven by a third motor independent of said first and second motors; said adjustment devices comprising respective motion input shafts, both housed in said mandrel coaxially with said axis.

20. The group according to claim 1 or 2, **characterised in that** it comprises a support body supporting each said rack and sprocket gear drive, and **in that** said support body, said rack and sprocket gear drive and said stem form part of a bent tile handling unit coupled to the units adjacent thereto in a rotated position spaced by a pitch P about the axis 4 for maintaining said stems along said helical path.
